# EUROPEAN PATENT SPECIFICATION

(11) **EP 1 282 504 B1**
(45) Date of publication and mention of the grant of the patent: **02.01.2004**
(21) Application number: 00937113.9
(22) Date of filing: 19.05.2000
(51) Int. Cl.: B29C 49/18, B29C 49/48

(54) **PLASTIC CONTAINER WITH INTEGRAL HANDLE**
KUNSTSTOFFBEHÄLTER MIT INTEGRIERTEM HANDGRIFF
RECIPIENT EN PLASTIQUE A POIGNEE INTEGREE

(43) Date of publication of application: 12.02.2003
(73) Proprietor: Limanjaya, Tjandra, Jakarta Pusat 10730 (ID)
(72) Inventor: Limanjaya, Tjandra, Jakarta Pusat 10730 (ID)
(74) Representative: Brooks, Nigel Samuel
(86) International application number: PCT/IB2000/000675
(87) International publication number: WO 2001/087573

(56) References cited:
- EP-A- 0 346 518
- US-A- 4 038 006
- US-A- 4 318 882
- US-A- 4 657 502
- US-A- 5 178 816

## Description

The present invention relates to a plastics material container, in particular a P.E.T. container with a hollow handle.

EP 0346518 describes a process for producing a PET bottle with a handle.

For bottles in excess of one litre in capacity, it is preferable to be able to provide the bottle with an integral handle. Bottles made of polyethylene can be provided with integral hollow handles by the extrusion blow moulding process. However, this process is not suitable for bottles of polyethylene terephalate - P.E.T. Nevertheless, P.E.T. is a preferred food grade material for bottles, being FDA approved.

P.E.T. bottles can be provided with handles. However these are usually separate mouldings, which are made before the bottle and fitted into the blow mould. This is an inconvenient and expensive process. For cheapness ofthe bottle, the handle is often of a cheaper material. However, this makes for inconvenience in reprocessing of used bottles. An alternative is to produce a handle of P.E.T. as an integral moulding with a preform, from which the bottle is injection blow moulded Such bottles are expensive in terms of usage of heavier material.

The object of the present invention is to provide an improved P.E.T. container, that is with a hollow handle.

According to the invention there is provided a method of forming a plastics material container having a hollow handle and a finger aperture between the handle and a main body of the container, the method consisting in the steps of:
- blowing a heated, injection moulded preform to a preliminary shape in a preliminary blow mould;
- separating the preliminarily shaped container from the preliminary mould;
- re-heating the preliminarily shaped container to elevated temperature;
- bringing together the preliminarily shaped container and a secondary blow mould for imparting finish formed shape to the container, the secondary mould impressing concavity into the container in the region of the finger aperture;
- blowing the heated, preliminarily shaped container in the secondary mould to impart the finish formed shape to the container;
- separating the container from the secondary mould;
- welding together opposite side walls of the container around the finger aperture; and
- cutting out the finger aperture.

In this specification, the term "preliminary shape" means a shape which is close to but distinct from the finish formed shape. In particular, the preliminary shape has overall dimensions which are generally similar to those of the finish formed shape. The preliminary shape is generally convex including at the finger aperture position; whilst the finish formed shape has concavity at the finger aperture (even although locally the container may be convex over its entire surface). The term "finish formed shape" is believed to be self-explanatory in referring to the final shape of the container.

The secondary mould in imparting the finger aperture concavity can bring the opposite side walls into contact around the concavity. Alternatively, the side walls may remain spaced, albeit closely, in the secondary mould and be actually abutted at the welding step.

Whilst it can be envisaged that the two blow mould steps and the re-heating step could all occur at the same station, for instance with one pair of mould parts approaching on one axis, the other pair approaching on an orthogonal axis and the heater approaching on a third orthogonal axis; the preform, preliminary bottle and finish formed bottle are preferably processed at sequential stations. Alternatively, it is envisaged that the three could be processed quite separately from each other at unrelated stations.

The welding step is preferably performed by bring opposed heated platens into contact with the opposite side walls at the finger aperture sufficiently firmly and at sufficient temperature to weld them together. Alternatively, the platens can be ultrasonically or otherwise excited for the welding.

The blowing of the preliminary container in the secondary mould is preferably performed with cold air at elevated pressure to ensure a good reproduction of the mould shape in the container and to cool the container below its solidification temperature. By "solidification temperature" is intended the temperature at or below which the container retains its finish formed shape in ambient temperature. Preferably the application of cold, high pressure air followed after initial circulation of heated air inside the container on closure of the secondary mould to maintain plasticity of the container, whilst the secondary mould is being closed.

The method of the invention is particularly applicable to forming containers, including bottles, out of P.E.T. For this, the re-heating step is typically to approximately 180°C.

According to another aspect of the invention there is provided a P.E.T. container comprising a hollow handle and a finger aperture between the handle and a main body of the container.

The internal space of the handle and the internal space of the main body of the container communicate with each other, whereby liquid contents of the container can flow from the main body into the handle.

According to a third aspect of the invention there is provided blow moulding equipment including:
- a preliminary blow mould for blowing a preform into a preliminarily shaped container;
- means for re-heating the preliminarily shaped container to elevated temperature;
- a secondary blow mould for imparting finish formed shape to the container, the secondary mould having:
- projecting portions of the mould which deform the side walls of the preliminarily shaped container to form the handle, a region of the main body around the finger aperture and portions of the side walls within the finger aperture.

To help understanding of the invention, a specific embodiment thereof will now be described by way of example and with reference to the accompanying drawings, in which:
Figure 1 is a front view of a P.E.T. bottle according to the invention;
Figure 2 is a cross-sectional side view of a preform for the bottle of Figure 1;
Figure 3 is a similar view ofthe preform blown to preliminary shape in a preliminary blow mould;
Figure 4 is a similar view of the preliminarily shaped bottle being reheated;
Figure 5 is a similar view of the preliminarily shaped bottle being secondarily blown in a secondary mould;
Figure 6 is a scrap transverse view on the line VI-VI in Figure 5, but on a larger scale and in the region of a finger aperture, ofthe bottle in the secondary mould;
Figure 7 is a cross-sectional transverse view of the bottle being heat sealed at the finger aperture;
Figure 8 is a similar view of the finger aperture being cut
Figure 9 is a side view of the finish formed bottle.

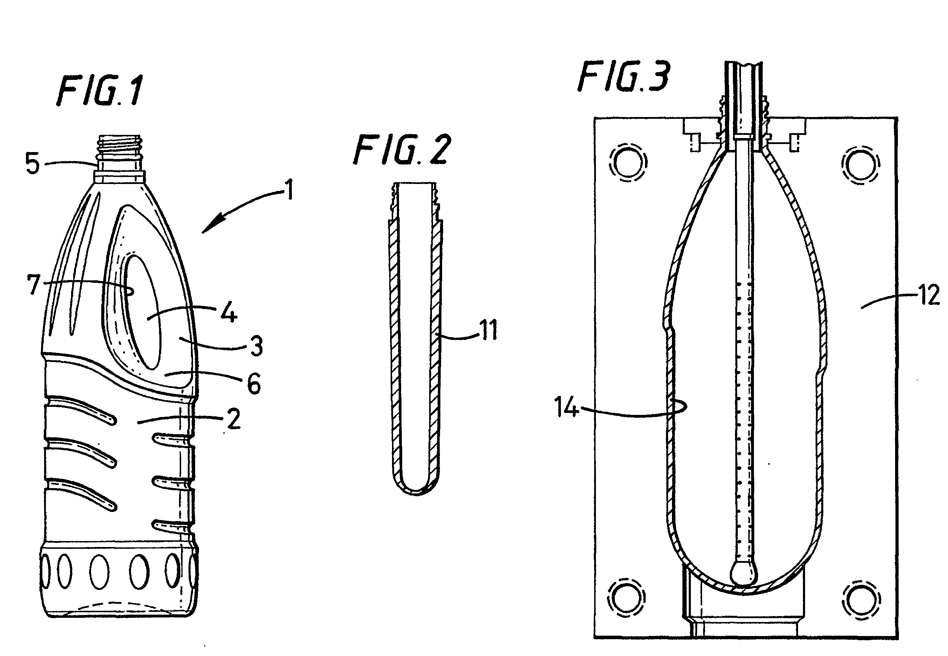

Referring first to Figure 1, the P.E.T. bottle 1 thereshown has a main body 2 and a handle 3. Between the handle and the body, the bottle has a finger aperture 4, allowing a user's fingers to pass round and grip the handle. The bottle has a . conventional neck 5 for a cap. On a central plane of the bottle and the handle, the opposite side walls 6 are welded together 7 around the finger aperture.

Now referring to the rest of the Figures, the starting point for the battle 1 is an injection moulded preform 11, see Figure 2. This is heated, positioned in a preliminary mould 12 and blown to a preliminary shape 14 of the bottle. The preliminary bottle is removed from preliminary mould. These steps - injection moulding, heating, blow moulding and removal from the mould - are all conventional in the blow moulding of P.E.T. bottles, except insofar as conventionally they result in an end product. In accordance with the present invention, the preliminary bottle is an intermediary product.

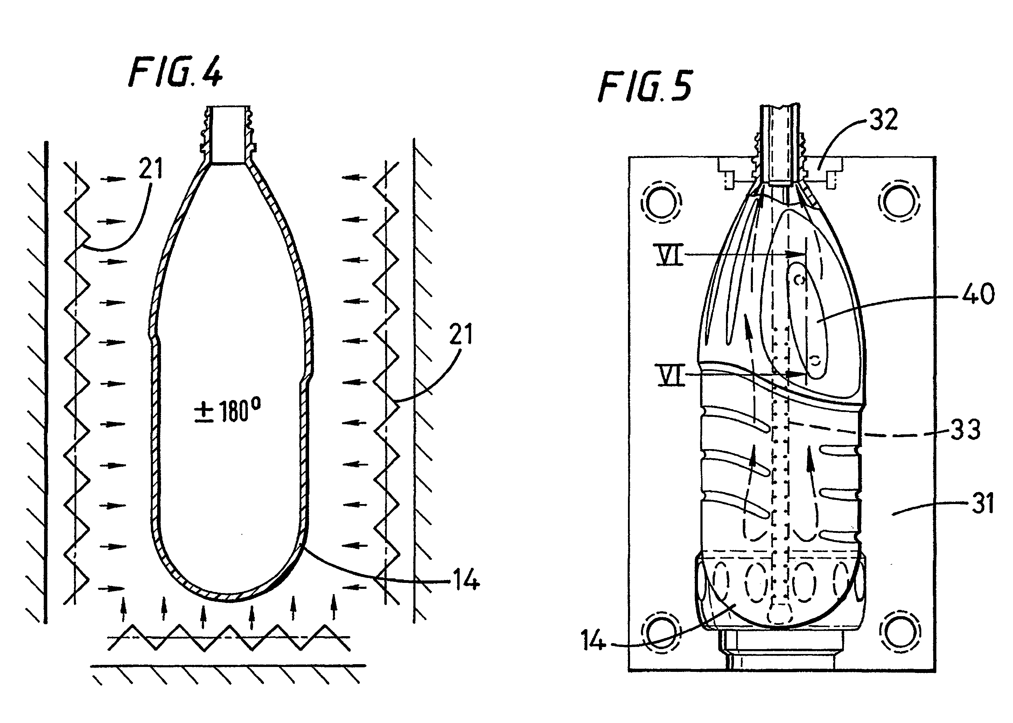

Next, it is set up in a heating station, where it is heated by radiant heaters 21, see Figure 4. They heat the preliminary bottle to 180°C ±20°. It is moved to a secondary mould 31. At the mould, the neck 5 is supported by a neck ring 32 and a blow pin 33 is advanced into the preliminary bottle 14 as the mould 31 is closed. During closure, heated air typically at the preheat temperature of the bottle, i.e. 180°C ±20°, is passed through the blow pin 33 at a pressure insufficient to blow the bottle, typically 0.5bar. As the mould closes, the preliminary bottle is contacted by projecting portions 34 of the mould 31 which form the handle 3, the region of the main body 20 around the finger aperture 4 and the portions 40 of the side walls.within the finger aperture. Thus the projecting portions deform a region of the preliminary bottle which was universally convex, into one which has two concavities, namely the portions 35 on opposite sides including the handle 3, the finger aperture portions 40 and the main body region 20. It should be noted that when the portions 40 are cut out - see below - the resulting surface of the bottle will be primarily, locally convex.

Once the mould is fully closed, which preferably leaves the opposite portions 40 abutting each other, the warm air flow is replaced by a high pressure cold air flow, typically at 30bar. This blows the bottle to its finish formed shape. The side walls come into firm contact with that the walls of the mould, which in combination with the cold air solidifies the walls. Thus when the secondary mould is opened, the bottle retains its finish formed shape.

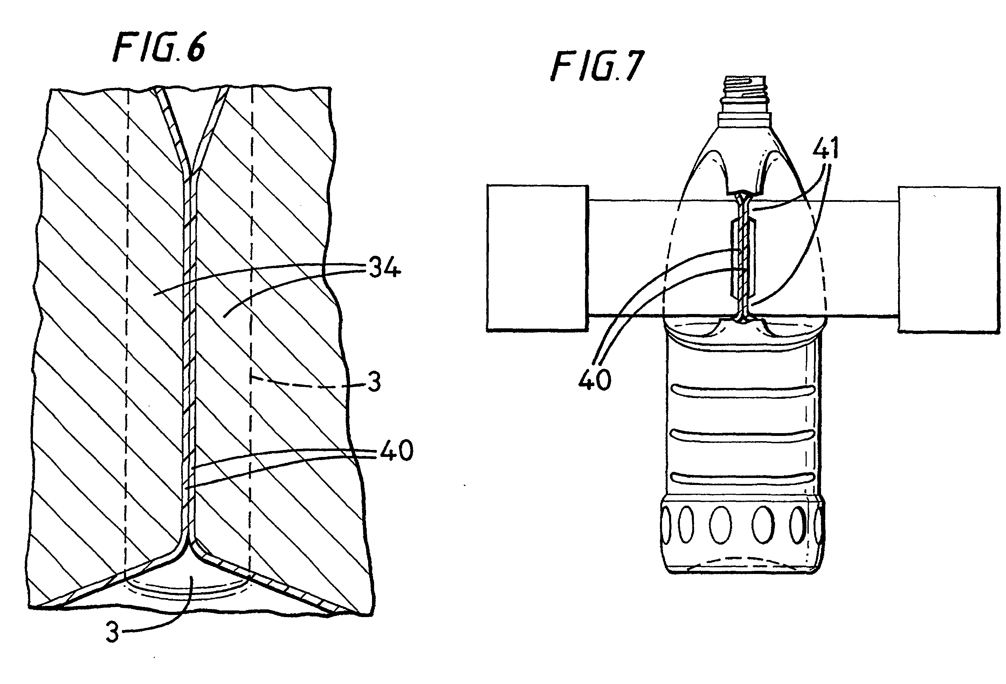

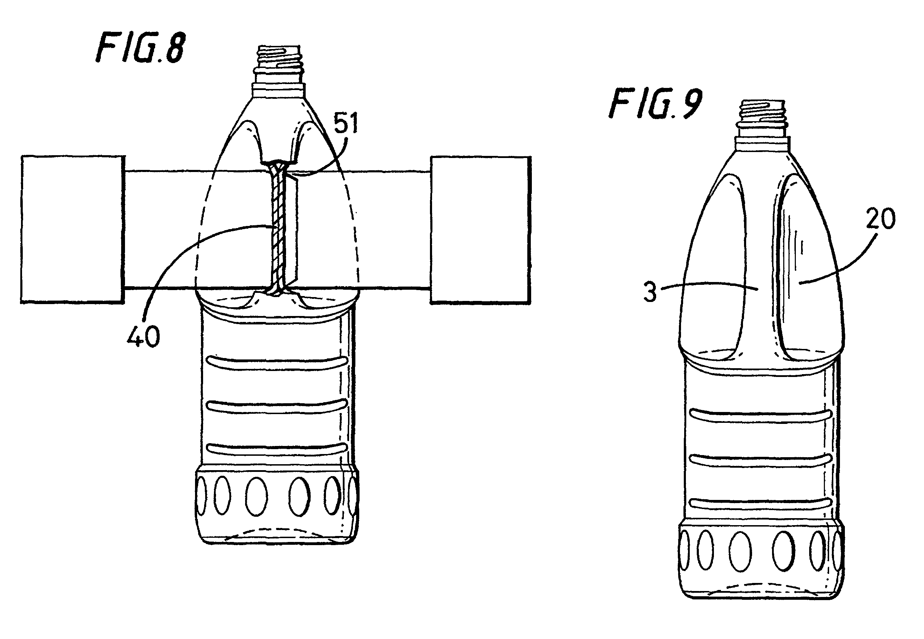

The bottle 1 is then moved to a sealing station, see Figure 7, where opposed heated platens 41 abut the finger aperture portions 40, particularly firmly around their edges. The side walls are thus sealed/welded to each around these edges. The bottle is moved again to a cutting station, see Figure 8, where opposed knife and die block members 51 cut the portions 40 from the handle 3 and the main body 20. This completes the formation of the bottle.

The invention is not intended to be restricted to the details of the above described embodiment. For instance, the container could be larger than a bottle and provided with two handles, one on either side. Also it could be a drum or the like with a top handle.

## Claims

1. A method of forming a plastics material container having a hollow handle (3) and a finger aperture (4) between the handle (3) and a main body (2) of the container, the method consisting in the steps of:
• blowing a heated, injection moulded preform (11) to a preliminary shape in a preliminary blow mould (12);
• separating the preliminarily shaped container (14) from the preliminary mould;
• re-heating the preliminarily shaped container to elevated temperature;
• bringing together the preliminarily shaped container and a secondary blow mould (31) for imparting finish formed shape to the container, the secondary mould impressing concavity into the container in the region of the finger aperture;
• blowing the heated, preliminarily shaped container in the secondary mould to impart the finish formed shape to the container;
• separating the container from the secondary mould;
• welding together opposite side walls of the container around the finger aperture; and
• cutting out the finger aperture.

2. A method as claimed in claim 1, wherein the secondary mould (31) in imparting the finger aperture (4) concavity brings the opposite side walls into abutting contact around the concavity.

3. A method as claimed in claim 1, wherein the secondary mould (31) in imparting the finger aperture concavity leaves the side walls closely spaced and the side walls are actually abutted subsequently at the welding step.

4. A method as claimed in claim 1, claim 2 or claim 3, wherein the preform, preliminary bottle (14) and finish formed bottle are processed at sequential stations.

5. A method as claimed in claim 1, claim 2 or claim 3, wherein the preform, preliminarily shaped container (14) and the finish formed container are processed at separate stations.

6. A method as claimed in any preceding claim, wherein the welding step is performed by bring opposed welding platens (41) into contact with the opposite side walls at the finger aperture (4) sufficiently firmly and at sufficient temperature to weld them together.

7. A method as claimed in claim 6, wherein the welding platens (41) are heated platens.

8. A method as claimed in claim 6, wherein the welding platens (41) are ultrasonically excited platens.

9. A method claim as claimed in any preceding claim, wherein the blowing of the preliminary container (14) in the secondary mould (31) is performed with cold air at elevated pressure for reproduction of the mould shape in the container and to cool the container below its solidification temperature.

10. A method as claimed in claim 9, including, in a step prior to application of cold, high pressure air, initial circulation of heated air inside the container on closure of the secondary mould (31) to maintain plasticity of the container whilst the secondary mould is being closed.

11. A method as claimed in any preceding claim, wherein the container (1) is of P.E.T. material and the re-heating step is to 180°C ±20°.

12. A blow moulding equipment for performing the method of any one of claims 1 11, including:
• a preliminary blow mould (12) for blowing a preform into a preliminarily shaped container;
• means for re-heating the preliminarily shaped container (14) to elevated temperature;
• a secondary blow mould (31) for imparting finish formed shape to the container, the secondary mould having:
• projecting portions (34) of the mould which deform the side walls of the preliminarily shaped container to form the handle (3), a region of the main body (2) around the finger aperture (4) and portions of the side walls within the finger aperture.

## Patentansprüche

1. Verfahren zum Formen eines Behälters aus Kunststoffmaterial, der einen hohlen Griff (3) und eine Fingeröffnung (4) zwischen dem Griff (3) und einem Hauptkörper (2) des Behälters aufweist, wobei das Verfahren in den Schritten besteht:
• Blasen eines erhitzten Spritzgußrohlings (11) zu einer Vorform in einem Vorblaswerkzeug (12);
• Trennen des vorgeformten Behälters (14) von dem Vorwerkzeug;
• Wiedererhitzen des vorgeformten Behälters auf eine erhöhte Temperatur;
• Zusammenbringen des vorgeformten Behälters und eines Sekundärblaswerkzeugs (31) zum Fertigformen des Behälters, wobei mit dem Sekundärwerkzeug im Bereich der Fingeröffnung Konkavität in den Behälter eingedrückt wird;
• Blasen des erhitzten, vorgeformten Behälters in dem Sekundärwerkzeug, um dem Behälter die fertiggeformte Form zu geben;
• Trennen des Behälters von dem Sekundärwerkzeug;
• Zusammenschweißen von entgegengesetzten Seitenwänden des Behälters um die Fingeröffnung herum; und
• Ausschneiden der Fingeröffnung.

2. Verfahren nach Anspruch 1, wobei das Sekundärwerkzeug (31) beim Erzeugen der Konkavität der Fingeröffnung (4) die gegenüberliegenden Seitenwände um die Konkavität herum in Anliegekontakt miteinander bringt.

3. Verfahren nach Anspruch 1, wobei das Sekundärwerkzeug (31) beim Erzeugen der Konkavität der Fingeröffnung die Seitenwände geringfügig beabstandet voneinander läßt und die Seitenwände tatsächlich im nachfolgenden Schweißschritt aneinandergebracht werden.

4. Verfahren nach Anspruch 1, nach Anspruch 2 oder nach Anspruch 3, wobei der Rohling, die vorgeformte Flasche (14) und die fertiggeformte Flasche in aufeinanderfolgenden Stationen bearbeitet werden.

5. Verfahren nach Anspruch 1, Anspruch 2 oder Anspruch 3, wobei der Rohling, der vorgeformte Behälter (14) und der fertiggeformte Behälter an getrennten Stationen bearbeitet werden.

6. Verfahren nach einem der vorhergehenden Ansprüche, wobei der Schweißschritt durchgeführt wird durch Inkontaktbringen von gegenüberliegenden Schweißplatten mit den gegenüberliegenden Seitenwänden an der Fingeröffnung (4) ausreichend eng und bei ausreichender Temperatur, um diese zusammenzuschweißen.

7. Verfahren nach Anspruch 6, wobei die Schweißplatten (41) erhitzte Platten sind.

8. Verfahren nach Anspruch 6, wobei die Schweißplatten (41) ultraschallerregte Platten sind.

9. Verfahren nach einem der vorhergehenden Ansprüche, wobei das Blasen des vorgeformten Behälters (14) in dem Sekundärwerkzeug (31) mit Kaltluft bei erhöhtem Druck zum Nachbilden der Werkzeugkontur in dem Behälter und zum Abkühlen des Behälters unterhalb seiner Erstarrungstemperatur durchgeführt wird.

10. Verfahren nach Anspruch 9, umfassend, in einem Verfahrensschritt vor dem Anwenden von Kaltluft mit hohem Druck, eine anfängliche Zirkulation von erhitzter Luft innerhalb des Behälters beim Schließen des Sekundärwerkzeugs (31), um Verformbarkeit des Behälters aufrechtzuhalten, während das Sekundärwerkzeug geschlossen wird.

11. Verfahren nach einem der vorhergehenden Ansprüche, wobei der Behälter (1) aus P.E.T. Material besteht und der Wiedererhitzungsschritt ein Erhitzen auf 180°C ± 20°C ist.

12. Blasformausrüstung zum Durchführen des Verfahrens nach einem der Ansprüche 1 bis 11, umfassend:
• ein Vorblaswerkzeug (12) zum Blasen eines Rohlings zu einem vorgeformten Behälter;
• Mittel zum Wiedererhitzen des vorgeformten Behälters (14) auf erhöhte Temperatur;
• ein Sekundärblaswerkzeug (31), um dem Behälter die fertiggeformte Form zu geben, wobei das Sekundärwerkzeug aufweist:
• Vorspringende Abschnitte (34) des Werkzeugs, welche die Seitenwände des vorgeformten Behälters deformieren, um einen Griff (3), einen Bereich des Hauptkörpers (2) um die Fingeröffnung (4) herum und Abschnitte der Seitenwände innerhalb der Fingeröffnung auszubilden.

## Revendications

1. Un procédé pour former un récipient en matière plastique possédant un poignée creuse (3) et une ouverture pour les doigts (4) entre la poignée (3) et un corps principal (2) du récipient, procédé consistant dans les étapes de :
- soufflage d'une préforme moulée d'injection, chauffée (11), en une forme préliminaire dans un moule de soufflage préliminaire (12) ;
- séparation du récipient préliminairement conformé (14) d'avec le moule préliminaire ;
- chauffage à nouveau du récipient préliminairement conformé, à une température élevée ;
- réunion du récipient préliminairement conformé et d'un moule de soufflage secondaire (31) pour donner une forme conformée finie au récipient, le moule secondaire produisant une concavité dans le récipient dans la région de l'ouverture pour les doigts ;
- soufflage du récipient préliminairement conformé, chauffé, dans le moule secondaire pour donner la forme conformée finie au récipient ;
- séparation du récipient d'avec le moule secondaire ;
- soudage ensemble de parois latérales opposées du récipient autour de l'ouverture pour les doigts ; et
- découpe autour de l'ouverture pour les doigts.

2. Un procédé tel que revendiqué dans la revendication 1, dans lequel le moule secondaire (31), en produisant la concavité dans l'ouverture pour les doigts (4), amène les parois latérales opposées en contact d'aboutement autour de la concavité.

3. Un procédé tel que revendiqué dans la revendication 1, dans lequel le moule secondaire (31), en produisant la concavité dans l'ouverture pour les doigts (4), laisse les parois latérales à proche distance et les parois latérales sont effectivement mises en contact d'aboutement ultérieurement à l'étape de soudage.

4. Un procédé tel que revendiqué dans la revendication 1, la revendication 2 ou la revendication 3, dans lequel la préforme, la bouteille préliminaire (14) et la bouteille conformée finie sont traitées à des postes à la suite.

5. Un procédé tel que revendiqué dans la revendication 1, la revendication 2 ou la revendication 3, dans lequel la préforme, la bouteille préliminaire (14) et la bouteille conformée finie sont traitées à des postes distincts.

6. Un procédé tel que revendiqué dans l'une des revendications précédentes, dans lequel l'étape de soudage est exécutée en amenant des platines de soudage opposées (41) en contact avec les parois latérales opposées à l'endroit de l'ouverture pour les doigts (4) suffisamment fermement et à une température suffisante pour les souder ensemble.

7. Un procédé tel que revendiqué dans la revendication 6, dans lequel les platines de soudage (41) sont des platines chauffées.

8. Un procédé tel que revendiqué dans la revendication 6, dans lequel les platines de soudage (41) sont des platines excitées par des ultrasons.

9. Un procédé tel que revendiqué dans l'une des revendications précédentes, dans lequel le soufflage du récipient préliminaire (14) dans le moule secondaire (31) est exécuté avec de l'air froid à pression élevée pour reproduction de la forme du moule dans le récipient et pour refroidir le récipient au-dessous de sa température de solidification.

10. Un procédé tel que revendiqué dans la revendication 9, comprenant, dans une étape antérieure à l'application de l'air froid à pression élevée, une circulation initiale d'air chauffé à l'intérieur du récipient à la fermeture du moule secondaire (31) pour maintenir la plasticité du récipient tandis que le moule secondaire est en cours de fermeture.

11. Un procédé tel que revendiqué dans l'une des revendications précédentes, dans lequel le récipient (1) est en un matériau PET et l'étape de chauffage à nouveau est à 180°C ± 20°.

12. Un équipement de moulage par soufflage pour exécuter le procédé de l'une quelconque des revendications 1 à 11, comprenant :
- un moule de soufflage préliminaire (12) pour souffler une préforme en un récipient préliminairement conformé ;
- des moyens pour chauffer à nouveau le récipient préliminairement conformé (14) à une température élevée ;
- un moule de soufflage secondaire (31) pour donner une forme conformée finie au récipient, le moule secondaire possédant :
- des parties en saillie (34) du moule qui déforment les parois latérales du récipient préliminairement conformé pour former la poignée (3), une région du corps principal (2) autour de l'ouverture pour les doigts (4) et des parties des parois latérales à l'intérieur de l'ouverture pour les doigts.
